# EUROPEAN PATENT SPECIFICATION

(11) **EP 4 335 582 B1**
(45) Date of publication and mention of the grant of the patent: **18.03.2026**
(21) Application number: 23783705.9
(22) Date of filing: 21.02.2023
(51) Int. Cl.: B23P 21/00, F16C 43/06, B23P 19/04, F16C 19/06

(54) **BALL PLACEMENT METHOD FOR BALL BEARING, BALL BEARING MANUFACTURING METHOD AND MANUFACTURING DEVICE, AND MACHINE AND VEHICLE MANUFACTURING METHOD**
KUGELPOSITIONIERUNGSVERFAHREN FÜR KUGELLAGER, KUGELLAGERHERSTELLUNGSVERFAHREN UND -HERSTELLUNGSVORRICHTUNG SOWIE MASCHINE UND FAHRZEUGHERSTELLUNGSVERFAHREN
PROCÉDÉ DE PLACEMENT DE BILLES POUR ROULEMENT À BILLES, PROCÉDÉ DE FABRICATION ET DISPOSITIF DE FABRICATION DE ROULEMENT À BILLES, ET PROCÉDÉ DE FABRICATION DE MACHINE ET DE VÉHICULE

(30) Priority: 17.06.2022 JP 2022098114
(43) Date of publication of application: 13.03.2024
(73) Proprietor: NSK Ltd., Tokyo 141-8560 (JP)
(72) Inventor: NAKANO, Makoto, Fujisawa-shi, Kanagawa 251-8501 (JP); DOBASHI, Kohei, Fujisawa-shi, Kanagawa 251-8501 (JP)
(74) Representative: Grünecker Patent- und Rechtsanwälte PartG mbB
(86) International application number: PCT/JP2023/006162
(87) International publication number: WO 2023/243148

(56) References cited:
- EP-A1- 3 483 462
- WO-A1-2018/128174
- WO-A1-2019/230023
- CN-A- 109 296 655
- CN-U- 201 526 615
- CN-U- 206 386 402
- JP-A- 2008 200 789
- JP-A- 2014 233 827
- JP-A- 2021 124 141
- US-A1- 2021 222 731

## Description

### TECHNICAL FIELD

The present invention relates to a ball arrangement method for a ball bearing, a manufacturing method and a manufacturing device for a ball bearing, and a manufacturing method for a machine and a vehicle. A manufacturing device according to the preamble of claim 8 is known from EP 3 483 462 A1, further manufacturing devices are known from CN 206 386 402 U and US 2021/222731 A1. CN 201 526 615 U refers to a ball collecting head, which is used for a ball collecting device of a bearing ball dividing cage assembly unit and mainly used for ball collection in assembly process of bearings easy to be loosened; and JP 2021 124141 A relates to a method for manufacturing a rolling bearing, the method enabling a rolling element to be highly efficiently loaded in an annular space between an inner ring and an outer ring, and methods for manufacturing a machine and a vehicle.

### BACKGROUND ART

As one of methods for producing (assembling) a product including a plurality of components such as bearings, there is a production technique such as a transfer machine, in which a large number of processing positions are provided, processing (assembly work) performed at one processing position is reduced, and products are successively conveyed to a downstream processing position. As an example of such a production technique, there is a method of arranging a plurality of balls at equal intervals between an inner ring and an outer ring of a ball bearing.

In the ball arranging technique described above, a ball collecting step of collecting a plurality of balls accommodated between the inner ring and the outer ring in one region in a circumferential direction is performed between a ball insertion step of inserting balls between the inner ring and the outer ring and a ball dividing step of arranging the balls at equal intervals in the circumferential direction. For this reason, a ball rubbing motion that occurs at the time of the ball collecting step is the cause of occurrence of ball damage.

On the other hand, Patent Literature 1 discloses a technique for manufacturing a ball bearing in which a ball collecting step is eliminated by holding balls after a ball insertion step in the ball bearing in one region between an inner ring and an outer ring instead of being scattered, and it is possible to shift from the ball insertion step to the ball dividing step at the same position by changing the tilt of the entire facility.

### CITATION LIST

### PATENT LITERATURE

Patent Literature 1: JP2019-209475A

### SUMMARY OF INVENTION

### TECHNICAL PROBLEM

In the configuration of Patent Literature 1 described above, a tilting operation function is provided to control a tilt angle of the entire manufacturing device. Accordingly, it is possible to process, at one position, the ball insertion step and the ball dividing step in which tilt angles of a conveying surface are different. Therefore, after the ball insertion step, the balls are held in one region between the inner ring and the outer ring without being scattered, and then by sequentially inserting tip ends of a plurality of work arrows corresponding to the number of balls in an axial direction, the plurality of balls can be arranged at equal intervals in the circumferential direction. However, in a case of a ball bearing having a large number of balls, there is a problem that work arrows for separating the balls are elongated, lowered in rigidity, and easily bent, and thus friction, deformation, and the like are likely to occur due to rubbing between the members.

Therefore, it is an object of the present invention to provide a ball arrangement method for a ball bearing, a manufacturing method and a manufacturing device for a ball bearing, and a manufacturing method for a machine and a vehicle, which are capable of reducing friction, deformation, and the like of a member so as to prevent occurrence of ball damage, are compatible with a ball bearing having a large number of balls, and can shorten a tact time.

### SOLUTION TO PROBLEM

The above mentioned technical problem is solved by a ball arrangement method according to claim 1 and a manufacturing device according to claim 8.

### ADVANTAGEOUS EFFECTS OF INVENTION

According to the ball arrangement of a ball bearing of the present invention, friction, deformation, and the like of a member is reduced so as to prevent occurrence of ball damage, a ball bearing having a large number of balls can be dealt with, and a tact time can be shortened.

### BRIEF DESCRIPTION OF DRAWINGS

Fig. 1 is a schematic side view showing a configuration of a manufacturing device for a ball bearing according to an embodiment.
Fig. 2 is a schematic side view showing an operation of the manufacturing device for a ball bearing shown in Fig. 1.
Fig. 3 is a perspective view of a workpiece that is a ball bearing.
Fig. 4 is a view showing a flow stop jig.
Fig. 5A is a front view of a block dividing jig.
Fig. 5B is a side view of the block dividing jig.
Fig. 5C is a bottom view of the block dividing jig.
Fig. 6 is a perspective view of a ball dividing portion.
Fig. 7 is a flowchart illustrating ball arrangement work.
Fig. 8A is a view illustrating a ball insertion step, and is a perspective view of the workpiece before a ball is inserted.
Fig. 8B is a view illustrating the ball insertion step, and is a perspective view of the workpiece after balls are inserted.
Fig. 9A is a view showing a state in which the balls are accommodated in an annular space, and is a plan view of the workpiece having no deformation allowance for holding the balls between an inner ring and an outer ring.
Fig. 9B is a view showing a state in which the balls are accommodated in the annular space, and is a plan view of the workpiece having a deformation allowance for holding the balls between the inner ring and the outer ring.
Fig. 10A is a perspective view of the workpiece, the flow stop jig, and the block dividing jig illustrating a flow stop step.
Fig. 10B is a perspective view of the workpiece, the flow stop jig, and the block dividing jig illustrating the flow stop step.
Fig. 10C is a perspective view of the workpiece, the flow stop jig, and the block dividing jig illustrating the flow stop step.
Fig. 11 is a schematic expanded view illustrating a state in which the balls are arranged by a ball dividing step.
Fig. 12 is a schematic configuration diagram of a motor to which a bearing is applied.

### DESCRIPTION OF EMBODIMENTS

Hereinafter, an embodiment of the present invention will be described in detail with reference to the drawings.

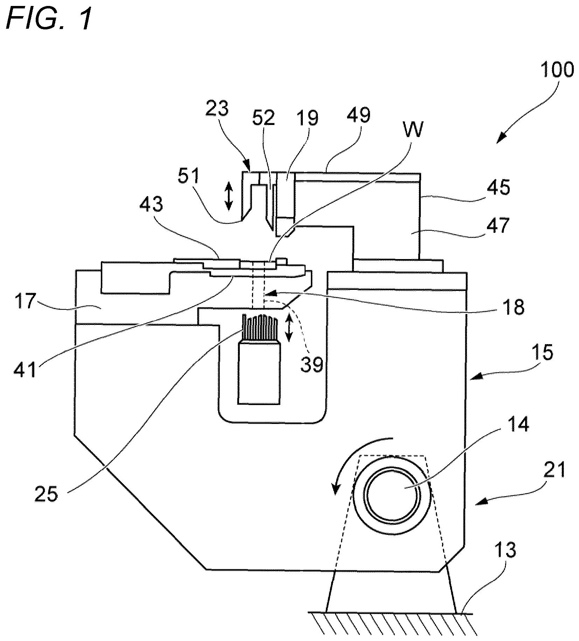

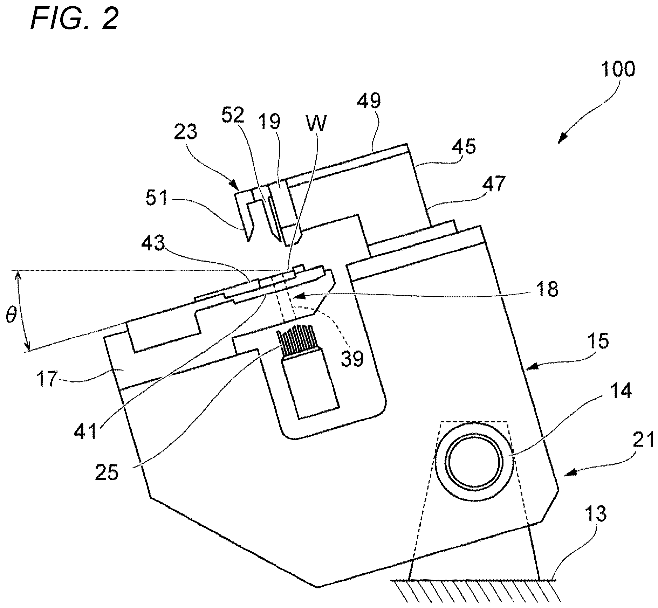

Fig. 1 is a schematic side view showing a configuration of a manufacturing device for a ball bearing according to the embodiment. Fig. 2 is a schematic side view showing an operation of the manufacturing device for a ball bearing shown in Fig. 1.

A manufacturing device for a ball bearing 100 according to the present embodiment includes a ball arranging unit 15 installed on a base 13 via a rotation shaft 14. The ball arranging unit 15 includes a workpiece holding table 17, an inner ring moving mechanism 18, a ball inserting portion 19, a tilting operation mechanism 21, a flow stop and block dividing mechanism 23, and a ball dividing portion 25.

The ball arranging unit 15 is swung by the tilting operation mechanism 21 between a horizontal state (a state in Fig. 1) in which the workpiece holding table 17 provided at an upper portion of the ball arranging unit 15 is horizontally arranged and a tilted state (a state in Fig. 2) in which the workpiece holding table 17 is tilted at a tilt angle θ with respect to a horizontal surface.

The workpiece holding table 17 holds a workpiece W at the upper portion of the ball arranging unit 15. The workpiece holding table 17 includes a holding portion 41. The workpiece W is fitted into the holding portion 41 from above. Further, the workpiece holding table 17 is provided with a lock member 43 that moves in a direction approaching and separating from the holding portion 41. The workpiece W is fixed to the workpiece holding table 17 by being pressed by the lock member 43 in a state of being fitted into the holding portion 41.

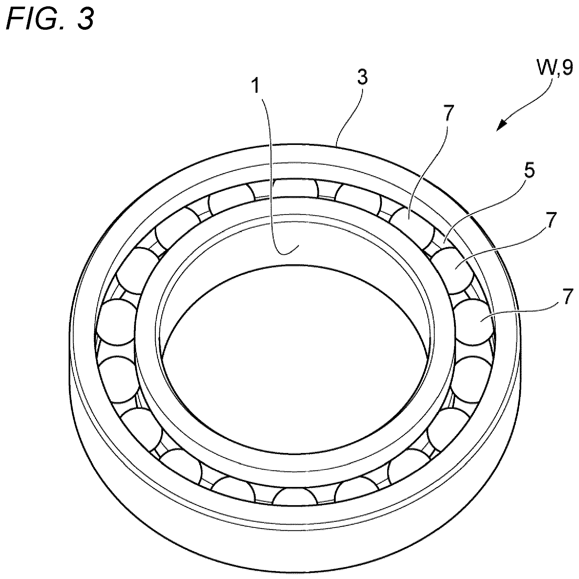

Fig. 3 is a perspective view of a workpiece that is a ball bearing. The workpiece W includes an inner ring 1, an outer ring 3, and a plurality of (in this example, 13) balls 7 that are rolling elements. The plurality of balls 7 are arranged in a circumferential direction at equal intervals in an annular space 5 between the inner ring 1 and the outer ring 3. The balls 7 are held by a cage (not shown). That is, a ball bearing 9 is formed by assembling the workpiece W. According to the manufacturing device for a ball bearing 100 of the present configuration, the plurality of balls 7 can be inserted into the annular space 5 between the inner ring 1 and the outer ring 3, and the plurality of balls 7 can be arranged at equal intervals in the circumferential direction.

The inner ring moving mechanism 18 shown in Figs. 1 and 2 has an inner ring support shaft 39. The inner ring support shaft 39 is fitted into the inner ring 1 of the workpiece W held by the holding portion 41 of the workpiece holding table 17 from below. The inner ring support shaft 39 is tilted together with a tilting operation of the ball arranging unit 15, and is always disposed coaxially with an axis of the workpiece W.

The ball inserting portion 19 is supported by a support portion 45 provided on an upper surface of the ball arranging unit 15. The support portion 45 includes a column portion 47 standing on the upper surface of the ball arranging unit 15 and an arm portion 49 extending from an upper end of the column portion 47 toward the workpiece holding table 17. The ball inserting portion 19 is supported by a tip end of the arm portion 49. The ball inserting portion 19 is used to insert the plurality of balls 7 into an annular space 5 (see Fig. 3) between the inner ring 1 and the outer ring 3 in the workpiece W held by the holding portion 41 of the workpiece holding table 17.

The flow stop and block dividing mechanism 23 is supported by the tip end of the arm portion 49 of the support portion 45. The flow stop and block dividing mechanism 23 includes a flow stop jig 51 and a block dividing jig 52 that move up and down with respect to the workpiece holding table 17. By being driven downward, tip end portions of the flow stop jig 51 and the block dividing jig 52 are inserted into the annular space 5 (see Fig. 3) between the inner ring 1 and the outer ring 3 in the workpiece W held by the holding portion 41 of the workpiece holding table 17.

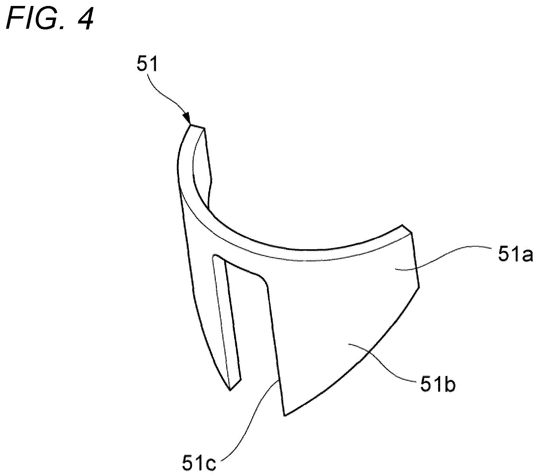

Fig. 4 is a perspective view showing the flow stop jig 51. As shown in Fig. 4, the flow stop jig 51 is formed in a plate shape that forms a portion of a circular tubular shape curving along the circumferential direction of the annular space 5 and that narrows along an insertion direction (downward in Fig. 4) into the annular space 5.

Specifically, the flow stop jig 51 is formed by connecting a main body portion 51a having a partial cylindrical shape and a tapered portion 51b joined to a lower end of the main body portion 51a with the same curvature and narrowing downward from the main body portion 51a. A notch 51c extending straight from a lower end of the tapered portion 51b toward the main body portion 51a is formed.

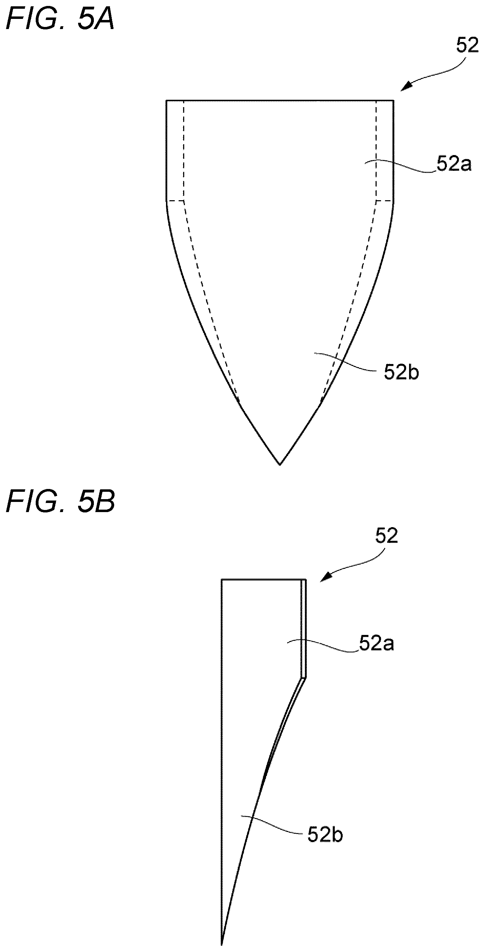

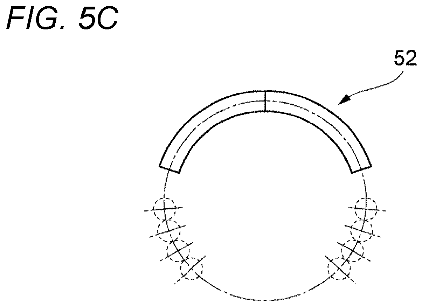

Fig. 5A is a front view of the block dividing jig 52. Fig. 5B is a side view of the block dividing jig 52. Fig. 5C is a bottom view of the block dividing jig 52.

As shown in Figs. 5A to 5C, the block dividing jig 52 is also formed in a plate shape that curves along the circumferential direction of the annular space 5 and that narrows along the insertion direction (downward in Figs. 5A and 5B) into the annular space 5.

The block dividing jig 52 is formed by connecting a main body portion 52a having a partial cylindrical shape and a tapered portion 52b extending toward a lower end (tip end in the insertion direction) of the main body portion 52a with the same curvature as that of the main body portion 52a and narrowing toward the lower end.

It is preferable that a length of the flow stop jig 51 in an upper-lower direction is longer than a length of the block dividing jig 52 in the upper-lower direction.

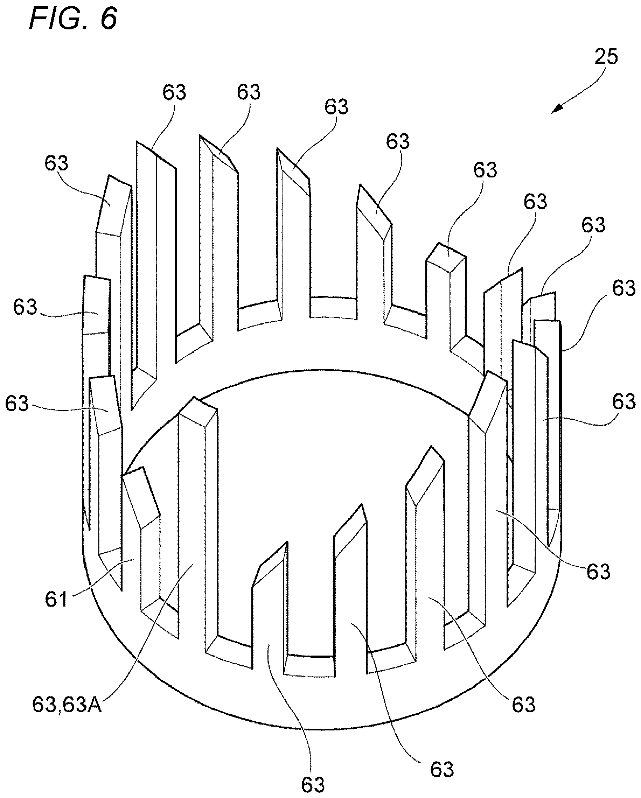

Fig. 6 is a perspective view of the ball dividing portion 25.

The ball dividing portion 25 is formed by connecting a base portion 61 formed in an annular shape and a plurality of work arrows 63 having different lengths. The work arrows 63 are erected on the base portion 61 and are arranged at equal intervals in the circumferential direction. The ball dividing portion 25 includes the same number (13 in this embodiment) of work arrows 63 as the number of balls 7. The plurality of work arrows 63 include one reference work arrow 63A. The other work arrows 63 are arranged in a positional relationship symmetrical along the circumferential direction with reference to the reference work arrow 63A. That is, around the reference work arrow 63A, the work arrows 63 having the same shape and height are arranged at corresponding circumferential positions (circumferential positions where distances from the reference work arrow 63A are equal) along one side and the other side in the circumferential direction. The reference work arrow 63A is longer than the work arrow 63 on both sides thereof. The work arrows 63, which are arranged at symmetrical positions with respect to each other along both sides of the reference work arrow 63A in the circumferential direction, gradually increase in axial length as the work arrows move away from the reference work arrow 63A within a range of ± 90 degrees in central angle from the reference work arrow 63A, and gradually decrease in axial length as the work arrows move away from the reference work arrow 63A beyond the range of ±90 degrees in central angle from the reference work arrow 63A.

A tip end portion of the reference work arrow 63A has a planar shape substantially perpendicular to a protruding direction from the base portion 61. A tip end portion of the work arrow 63 arranged within ± 90 degrees of the central angle from the reference work arrow 63A is an inclined surface facing the reference work arrow 63A along the circumferential direction, and a tip end portion of the work arrow 63 arranged beyond ± 90 degrees of the central angle from the reference work arrow 63A is an inclined surface facing an opposite side to the reference work arrow 63A along the circumferential direction.

Each of the work arrows 63 in a symmetrical positional relationship with respect to the reference work arrow 63A preferably has a shape that is a mirror image with respect to a plane passing through the center of the reference work arrow 63A and an axis of the ball dividing portion 25, but may not necessarily be the same.

The flow stop jig 51 and the block dividing jig 52 of the flow stop and block dividing mechanism 23 and the ball dividing portion 25 are disposed in the upper-lower direction with the workpiece W held by the holding portion 41 of the workpiece holding table 17 sandwiched therebetween. In the example shown in Figs. 1 and 2, the flow stop jig 51 and the block dividing jig 52 are disposed above the workpiece W, and the ball dividing portion 25 is disposed below the workpiece W. In the tilted state (the state in Fig. 2) in which the workpiece holding table 17 is tilted by the tilting operation mechanism 21, the reference work arrow 63A of the ball dividing portion 25 is disposed so as to be on a lower side of the tilt of the workpiece W. The ball dividing portion 25 may be disposed above the workpiece W, and the flow stop jig 51 and the block dividing jig 52 may be disposed below the workpiece W.

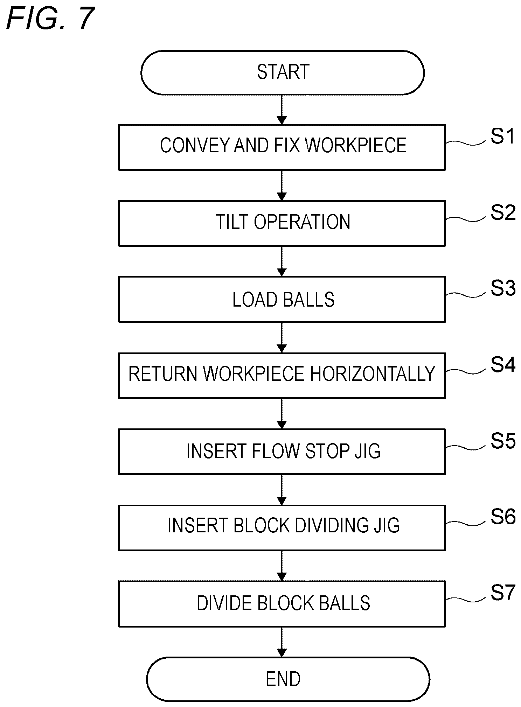

Next, a case where a ball bearing is manufactured by inserting balls into the workpiece W by the manufacturing device for a ball bearing 100 described above will be described by steps along the flowchart shown in Fig. 7.

### (Workpiece Fixing Step)

The conveyed work W is held by the holding portion 41 of the workpiece holding table 17 with respect to the ball arranging unit 15 in the horizontal state (step S1). At this time, the inner ring 1 is supported by the inner ring support shaft 39 inserted into an inner circumference thereof, and the outer ring 3 is fixed to the holding portion 41 by the lock member 43.

### (Tilting Operation Step)

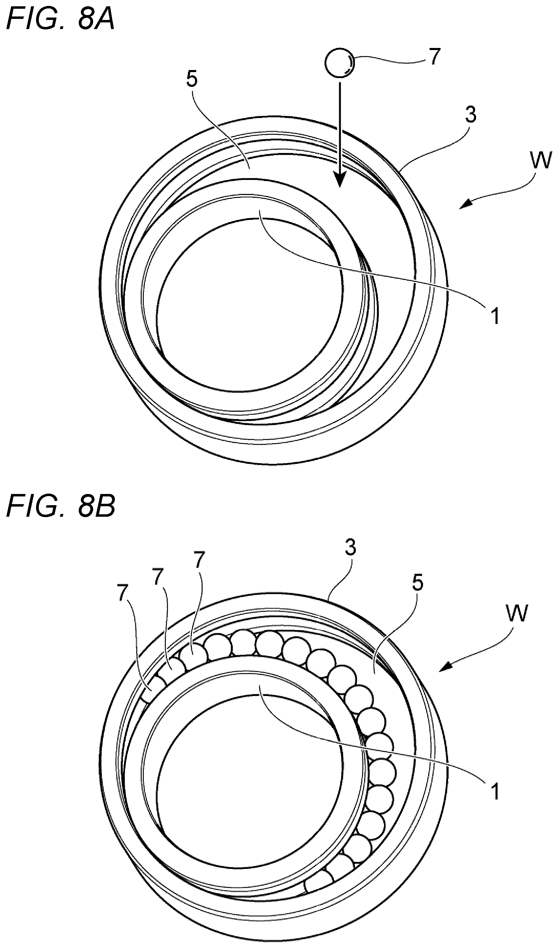

The tilting operation mechanism 21 turns the ball arranging unit 15 into the tilted state in which the workpiece holding table 17 is tilted at the tilt angle θ with respect to the horizontal surface (step S2). At this time, the inner ring support shaft 39 of the inner ring moving mechanism 18 is tilted together with the tilting operation of the ball arranging unit 15. Further, a central axis of the inner ring support shaft 39 of the inner ring moving mechanism 18 is disposed at a position displaced to a lower side (left side in Fig. 2) of the tilt in a plane orthogonal to a central axis of the workpiece W. In this way, the center of the inner ring 1 is eccentric to the lower side of the tilt with respect to the center of the outer ring 3. Accordingly, the annular space 5 between the inner ring 1 and the outer ring 3 narrows on the lower side of the tilt and widens in a radial direction in a region on an upper side of the tilt (see Fig. 8A).

### (Ball Insertion Step)

Fig. 8A is a view illustrating the ball insertion step, and is a perspective view of the workpiece before a ball is inserted. Fig. 8B is a view illustrating the ball insertion step, and is a perspective view of the workpiece after the balls are inserted.

As shown in Fig. 8A, the balls 7 are inserted into the annular space 5 between the inner ring 1 and the outer ring 3 held by the workpiece holding table 17 (see Figs. 1 and 2) from the ball inserting portion 19 (step S3). At this time, the annular space 5 is in a state where an upper side of the tilt is widened, and the balls 7 can be easily and smoothly inserted into the annular space 5 by the ball inserting portion 19. In addition, the balls 7 roll and move to the left and right due to its own weight without remaining at a inserting location. Thus, when the ball 7 is inserted, the already inserted ball 7 does not get in the way. As shown in Fig. 8B, the balls 7 inserted into the annular space 5 are accommodated in a state of being collected in a widened region on the upper side of the tilt. That is, the balls 7 inserted in the annular space 5 are accommodated in a collected state in one region along the circumferential direction of the annular space 5.

### (Horizontal Operation Step)

The tilting operation mechanism 21 turns the ball arranging unit 15 into the horizontal state (the state of Fig. 1) in which the workpiece holding table 17 is horizontal (step S4). At this time, the central axis of the inner ring support shaft 39 is moved to a position coaxial with the axis of the workpiece W. As a result, the centers of the outer ring 3 and the inner ring 1 coincide with each other, and the annular space 5 becomes a uniform gap in the circumferential direction.

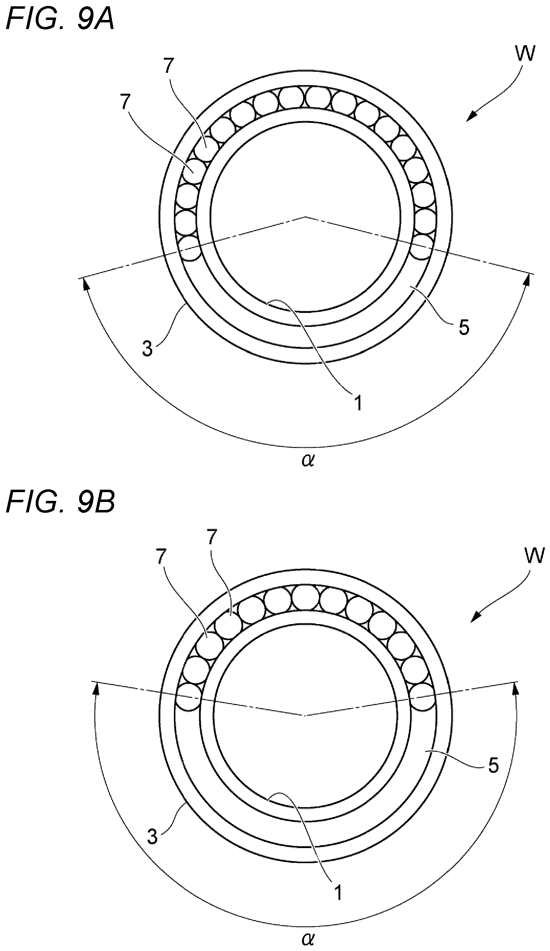

Fig. 9A is a view showing a state in which the balls are accommodated in the annular space, and is a plan view of the workpiece having no deformation allowance for holding the balls between the inner ring and the outer ring. Fig. 9B is a view showing a state in which the balls are accommodated in the annular space, and is a plan view of the workpiece having a deformation allowance for holding the balls between the inner ring and the outer ring.

As shown in Fig. 9A, in the annular space 5 with the uniform gap in the circumferential direction, the balls 7 are collected in one region, and the outside in the circumferential direction than the one region becomes a space without the balls 7. In a workpiece having no deformation allowance for holding the balls 7 between the inner ring 1 and the outer ring 3, a region (central angle) α of the space is in a range of 180° or more. In a case where the workpiece W has a deformation allowance for holding the balls 7 in grooves of the inner ring 1 and the outer ring 3, as shown in Fig. 9B, a region (central angle) α of the space without the balls 7 in the outside in the circumferential direction than the one region is in a range of less than 180°.

### (Flow Stop Step and Block Dividing Step)

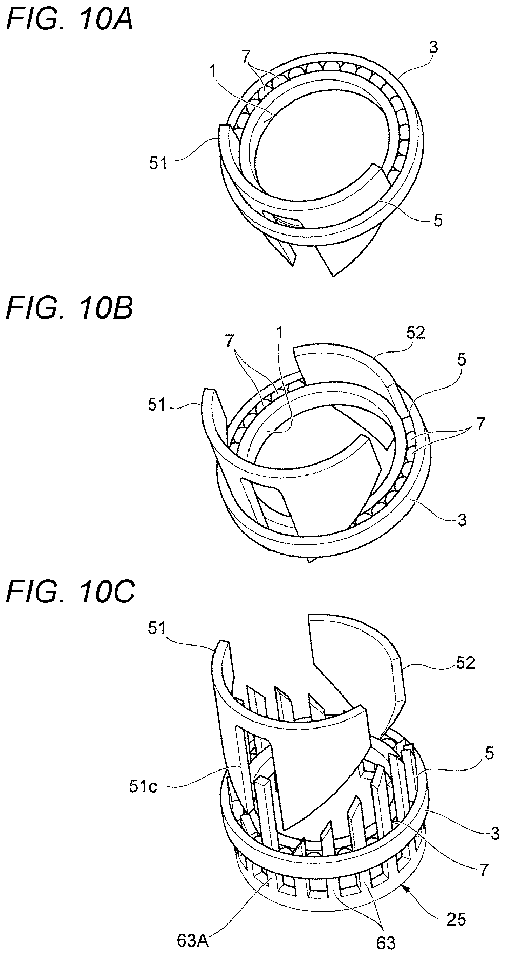

Figs. 10A, 10B, and 10C are perspective views of the workpiece W, the flow stop jig 51, and the block dividing jig 52 illustrating the flow stop step and a block dividing step.

First, the flow stop jig 51 of the flow stop and block dividing mechanism 23 (Fig. 1) is inserted into the space without the balls 7 in the annular space 5 of the workpiece W along the axial direction of the inner ring 1 and the outer ring 3 from above (step S5). Here, when the centers of the outer ring 3 and the inner ring 1 are made to coincide with each other, the balls 7 collected in the one region can roll and move to the space without the balls 7. However, as shown in Fig. 10A, since the flow stop jig 51 is inserted into the annular space 5, the movement of the inserted balls 7 can be restricted and the balls 7 can be kept in the one region.

Thereafter, as shown in Fig. 10B, the block dividing jig 52 is inserted into the annular space 5 of the workpiece W on a side facing the flow stop jig 51 in the radial direction (step S6). At this time, at the same time as the insertion of the block dividing jig 52, the flow stop jig 51 is moved in a removing direction (the counter-insertion direction). As a result, a circumferential length of the tapered portion 52b of the block dividing jig 52 in the annular space 5 is increased, and a circumferential length of the tapered portion 51b of the flow stop jig 51 in the annular space 5 is decreased. Then, the block dividing jig 52 is allowed to be inserted into the annular space 5, and the balls 7 move in the circumferential direction while being sandwiched between the flow stop jig 51 and the block dividing jig 52. In this manner, the balls 7 are divided into two groups in the annular space 5 by the flow stop jig 51 and the block dividing jig 52.

The operation of inserting the flow stop jig 51 and the block dividing jig 52 into the annular space 5 is performed in accordance with the horizontal operation in which the ball arranging unit 15 is returned horizontally and the inner ring 1 is moved to align the centers of the outer ring 3 and the inner ring 1. The operation may be performed after the ball arranging unit 15 is made horizontally.

### (Block Ball Dividing Step)

As shown in Fig. 10C, from the state in which the flow stop jig 51 and the block dividing jig 52 are disposed in the annular space 5, while removing the flow stop jig 51 and the block dividing jig 52 from the annular space 5, the ball dividing portion 25 is raised with respect to the workpiece W to insert the plurality of work arrows 63 into the annular space 5.

At this time, the longest work arrow 63 other than the reference work arrow 63A enters between the flow stop jig 51 and the block dividing jig 52. The flow stop jig 51 has the tapered portion 51b and the block dividing jig 52 has the tapered portion 52b, so that an upper end of the longest work arrow 63 is prevented from interfering with the flow stop jig 51 and the block dividing jig 52. On the other hand, the reference work arrow 63A enters and is accommodated in the notch 51c of the flow stop jig 51, so that the reference work arrow 63A does not interfere with the flow stop jig 51.

As the ball dividing portion 25 is raised, between the balls 7 arranged in the annular space 5 and divided into two groups, tip ends of the plurality of work arrows 63 protruded in accordance with the number of the balls 7 are sequentially inserted in the axial direction, and the plurality of balls 7 are arranged at equal intervals in the circumferential direction (step S7).

A raising speed of the flow stop jig 51 and the block dividing jig 52 is substantially the same as that of the ball dividing portion 25. Therefore, when the flow stop jig 51, the block dividing jig 52, and the ball dividing portion 25 are raised, a relative position of the flow stop jig 51 and the ball dividing portion 25 hardly changes. That is, the relative positions of the flow stop jig 51 and the block dividing jig 52, the ball dividing portion 25, and the balls 7 change. That is, as the flow stop jig 51 and the block dividing jig 52 are retracted, the ball dividing portion 25 enters and the work arrows 63 are allowed to enter between the balls 7.

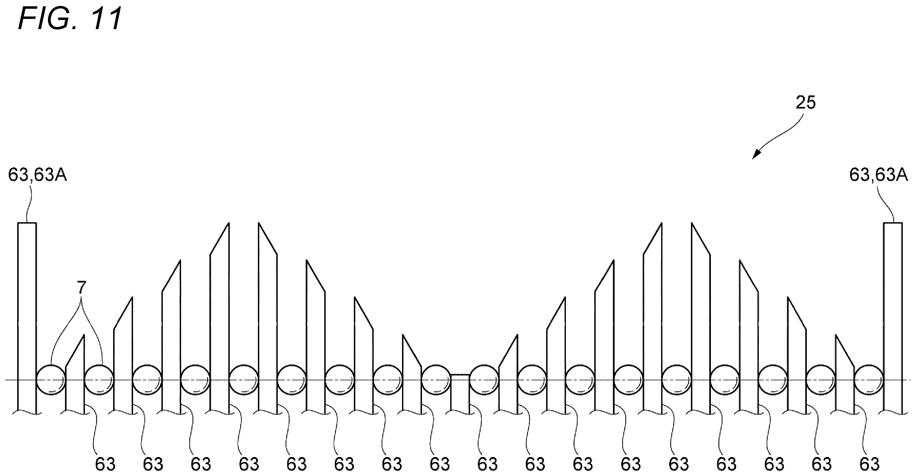

Finally, as shown in Fig. 11, the work arrows 63 of the ball dividing portion 25 enters between the balls 7 accommodated in the annular space 5, respectively, and the plurality of balls 7 are arranged at equal intervals in the circumferential direction.

Thereafter, by fitting a cage (not shown) for holding the balls 7 into the annular space 5, a ball bearing in which the balls 7 are evenly arranged and rotatably held is provided.

As described above, the ball arrangement method for a ball bearing according to the present embodiment includes the "tilting operation" of changing the tilt angle of the entire device, the "flow stop step" of preventing the balls from scattering at the time of ball inserting, the "block dividing step" of distributing the balls to two regions from the state where the balls are collected in one region between the inner ring and the outer ring after the ball inserting, and the "block ball dividing step" of sequentially inserting the work arrows into the plurality of balls distributed to the two regions to arrange the balls at equal intervals in the circumferential direction. By the flow stop step, it is possible to shift to the ball dividing step in the state where the balls inserted between the inner ring and the outer ring are held in one location without being scattered, so that the ball collecting step in the related art becomes unnecessary.

According to the present embodiment, by executing the tilting operation step of controlling the tilt angle of the entire device, the ball insertion step and the ball dividing step in which the tilt angles of the conveying surface are different can be processed at one position without horizontally moving the inner ring and the outer ring. In addition, in order to cope with a ball bearing having a large number of balls, it is possible to distribute the balls held at one location to two regions so that the balls can be divided. This is accomplished by performing the flow stop step of preventing scattering of the balls at the time of ball inserting, thereby preventing the balls inserted between the inner ring and the outer ring from being scattered, and by performing the block dividing step of collectively distributing the balls into two regions. Thereafter, since it is possible to shift to the ball dividing step, the ball collecting step in the related art is not necessary.

Further, by eliminating the ball rubbing motion in the ball collecting step, the occurrence of ball damage is reduced, and by performing the ball dividing step from the ball insertion step at one position, there is no need to convey the ball bearings between steps.

In addition, according to the present embodiment, the problem that in the case of a ball bearing having a large number of balls, the work arrows are elongated and lowered in rigidity, and friction and deformation are likely to occur is solved. Further, it is possible to assemble a workpiece without a snap allowance by the same method. Further, the balls 7 are distributed to two regions, and the tip ends of the plurality of work arrows 63 protruded in accordance with the number of balls 7 in each region are sequentially inserted in the axial direction to arrange the plurality of balls 7 at equal intervals in the circumferential direction. As a result, it is possible to reduce abrasion and deformation of the ball dividing portion 25, and the occurrence of damage of the balls 7, and to shorten a working time.

According to the present embodiment, by eliminating the ball rubbing motion in the ball collecting step, the occurrence of ball damage can be reduced. Further, by the block dividing step and the block ball dividing step, even if the number of balls is large, the work arrows 63 can be made relatively short and highly rigid, and friction and deformation can be reduced. Further, by distributing the balls 7 into the two regions, an insertion load of the work arrow 63 can be reduced, the damage of the ball 7 and the deformation of the ball dividing portion 25 can be reduced, and a ball dividing time can be shortened.

According to the present embodiment, workability can be improved by reducing the number of man-hours for arranging the balls in the ball bearing. Further, by eliminating the ball rubbing motion in the ball collecting step, a risk of occurrence of ball damage can be reduced. In addition, by continuously performing the ball dividing step from the ball insertion step, assembling can be easily performed even for a ball bearing without a deformation allowance for holding the balls 7 between the inner ring 1 and the outer ring 3.

In addition, in the ball insertion step, the inner ring 1 is moved to the side opposite to the one region with respect to the outer ring 3, and the annular space 5 is expanded in the radial direction in the one region to load the balls 7. As a result, the balls can be smoothly inserted into the annular space 5.

In addition, in the flow stop step, the flow stop jig 51 is inserted into the annular space 5 along the axial direction of the inner ring 1 and the outer ring 3. Therefore, movement of the balls 7 collected in the one region is restricted by the flow stop jig 51, thereby preventing the balls 7 from being scattered. As a result, the plurality of balls 7 inserted into the annular space 5 can be divided while being held in one location without being scattered.

In addition, after the insertion of the flow stop jig 51, the block dividing jig 52 is inserted into the annular space 5 along the axial direction of the inner ring 1 and the outer ring 3. Thus, the plurality of balls 7 can be divided into two groups, and lengths of the work arrows 63 can be shortened. As compared with, for example, a configuration in which balls are distributed to a plurality of regions and a plurality of work arrows are inserted into each region (JP2008-200789A), by using the flow stop jig 51 and the block dividing jig 52 together, the configuration of a device such as a driving mechanism of the work arrow or the like can be greatly simplified, and the block dividing operation (work) can be significantly simplified.

In addition, in the ball insertion step, the inner ring 1 and the outer ring 3 are tilted with the one region upward from the horizontal plane. Therefore, the balls 7 inserted into the one region of the annular space 5 move downward under its own weight and are arranged in order. As a result, the ball insertion step can be smoothly performed.

Further, it is possible to continuously execute the ball insertion step to the ball dividing step without horizontally conveying the inner ring 1 and the outer ring 3. Therefore, scattering of the balls 7 during horizontal conveyance can be eliminated, and workability can be improved.

According to a manufacturing method for a ball bearing of manufacturing a ball bearing in which the balls 7 are arranged at equal intervals in the annular space 5 between the inner ring 1 and the outer ring 3, by using the ball arrangement method described above, it is possible to easily manufacture a ball bearing in which the balls 7 are arranged at equal intervals in the circumferential direction in the annular space 5 between the inner ring 1 and the outer ring 3.

Further, according to the manufacturing device for a ball bearing 100 of the present embodiment, the ball insertion step of inserting the plurality of balls 7 in one region along the circumferential direction of the annular space 5 by the ball inserting portion 19 and the ball dividing step of arranging the balls 7 at equal intervals in the circumferential direction by the work arrows 63 of the ball dividing portion 25 can be continuously performed. Thus, the ball collecting step of collecting the balls 7 inserted into the annular space 5 in the ball insertion step at one place can be omitted. Accordingly, workability can be improved by reducing the number of man-hours for arranging the balls in the ball bearing. Further, by eliminating the ball rubbing motion in the ball collecting step, the occurrence of ball damage can be reduced. In addition, by continuously performing the ball dividing step from the ball insertion step, assembling can be easily performed even for a ball bearing without a deformation allowance for holding the balls between the inner ring and the outer ring.

In addition, by moving the inner ring 1 to the side opposite to the one region with respect to the outer ring 3 by the inner ring moving mechanism 18, and expanding the annular space 5 in the radial direction in the one region, it is possible to easily load balls into the annular space 5 and further improve workability.

In addition, the tilting operation mechanism 21 tilts axial vertical surfaces of the inner ring 1 and the outer ring 3 held by the workpiece holding table 17, so that the balls 7 inserted into the one region of the annular space 5 move downward by its own weight and are arranged in this order. As a result, the ball inserting work by the ball inserting portion 19 can be smoothly performed.

Further, the flow stop jig 51 and the block dividing jig 52 are formed in a plate shape that curves along the circumferential direction of the annular space 5 and narrows along the insertion direction into the annular space 5. As a result, the movement of the balls 7 in the annular space 5 can be favorably restricted by the flow stop jig 51 and the block dividing jig 52.

Further, since the tapered portions 51b and 52b smoothly contact the balls 7 in the annular space 5 when the flow stop jig 51 and the block dividing jig 52 are inserted into and removed from the annular space 5, it is possible to prevent the occurrence of ball damage due to the contact between the flow stop jig 51 and the block dividing jig 52 and the balls 7.

As described above, the present invention is not limited to the above-described embodiments, and combinations of the respective configurations of the embodiments and changes and modifications made by those skilled in the art based on the descriptions in the description and the well-known technique are intended by the present invention and are thus also included within the scope of the present invention to be protected.

The manufacturing method for a ball bearing described above can also be applied to the manufacture of various machines (including manual powered machines) including a ball bearing. For example, the present invention can be applied to a linear motion guide device such as a rail or a slider, a ball screw device or a screw device such as a screw shaft or a nut, a linear motion device such as a device in which a linear motion guide bearing and a ball screw are combined, or an actuator such as an XY table. Further, the present invention can be applied to steering devices such as a steering column, a universal joint, an intermediate gear, a rack-and-pinion, an electric power steering device, a worm reduction gear, and a torque sensor. The present invention can be widely applied to vehicles including the machine, a steering device, and the like, machine tools, household appliances, and the like. According to the machine, the vehicle, and the like obtained by this method, it is possible to achieve a high-quality configuration at a lower cost than in the related art.

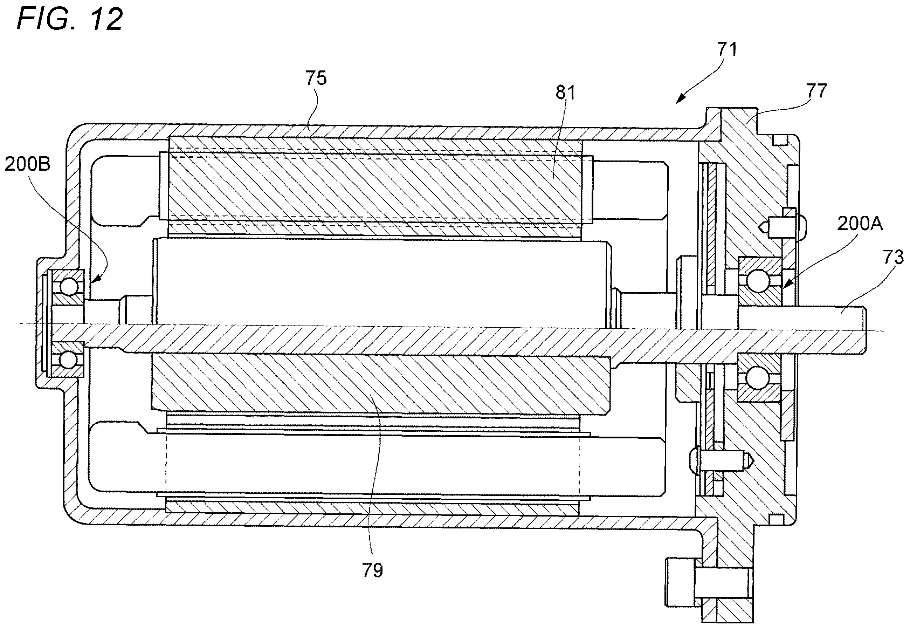

Further, a bearing obtained by the manufacturing method for a ball bearing described above can be applied to, for example, bearings 200A and 200B that support a rotation shaft 73 of a motor 71 shown in Fig. 12. The motor 71 is a brushless motor and includes a center housing 75 having a cylindrical shape, and a front housing 77 having a substantially circular plate shape that closes one opening of the center housing 75. Inside the center housing 75, the rotatable rotation shaft 73 is supported along an axial center of the center housing 75 via the bearings 200A and 200B disposed at a bottom of the front housing 77 and the center housing 75. A motor-driving rotor 79 is provided around the rotation shaft 73, and a stator 81 is fixed to an inner peripheral surface of the center housing 75. The motor 71 configured as described above is generally mounted on a machine or vehicle, and rotates the rotation shaft 73 supported by the bearings 200A and 200B.

The above example is just one example, and as an example of application of the bearing, the bearing of this configuration can be suitably applied to a location where relative rotation occurs, which can lead to an improvement in product quality.

### REFERENCE SIGNS LIST

1 inner ring
3 outer ring
5 annular space
7 ball
9 ball bearing
17 workpiece holding table
18 inner ring moving mechanism
19 ball inserting portion
21 tilting operation mechanism
23 flow stop and block dividing mechanism
25 ball dividing portion
51 flow stop jig
52 block dividing jig
63 work arrow
71 motor
100 manufacturing device for ball bearing
200A, 200B bearing

## Claims

1. A ball arrangement method for a ball bearing (9) comprising following steps executed in order:
a ball insertion step of inserting a plurality of balls (7) in one region along a circumferential direction of an annular space (5) formed between an inner ring (1) and an outer ring (3);
a flow stop step of disposing a flow stop jig (51) outside the one region of the annular space (5) in the circumferential direction along an axial direction of the inner ring (1) and the outer ring (3) to keep the plurality of inserted balls (7) in the one region;
a block dividing step of disposing a block dividing jig (52) along the axial direction of the inner ring (1) and the outer ring (3) to divide the plurality of balls (7) into groups in the annular space (5), wherein, at the same time as the insertion of the block dividing jig (52), the flow stop jig (51) is moved from the annular space (5) in a removing direction such that the plurality of balls (7) move in the circumferential direction while being sandwiched between the flow stop jig (51) and the block dividing jig (52); and
a ball dividing step of, from a state in which the flow stop jig (51) and the block dividing jig (52) are disposed in the annular space (5), while removing the flow stop jig (51) and the block dividing jig (52) from the annular space (5), sequentially inserting tip ends of a plurality of work arrows (63) protruded in accordance with the number of balls (7) between the plurality of balls (7) in an axial direction to arrange the plurality of balls (7) at equal intervals in the circumferential direction.

2. The ball arrangement method for a ball bearing (9) according to claim 1, wherein in the ball insertion step, the inner ring (1) is moved to a side opposite to the one region with respect to the outer ring (3), and the annular space (5) is expanded in a radial direction in the one region to load the balls (7).

3. The ball arrangement method for a ball bearing (9)according to claim 1, wherein in the flow stop step, the flow stop jig (51) is inserted into the annular space (5) along the axial direction of the inner ring (1) and the outer ring (3), and in the block dividing step, the block dividing jig (52) is inserted into the annular space (5) along the axial direction of the inner ring (1) and the outer ring (3).

4. The ball arrangement method for a ball bearing (9) according to claim 1, wherein in the ball insertion step, the inner ring (1) and the outer ring (3) are tilted with the one region upward from a horizontal plane.

5. The ball arrangement method for a ball bearing (9) according to any one of claims 1 to 4, wherein the ball insertion step to the ball dividing step are continuously executed without horizontally conveying the inner ring (1) and the outer ring (3).

6. A manufacturing method for a ball bearing (9) comprising:
manufacturing a ball bearing (9) in which the balls (7) are arranged at equal intervals in the annular space (5) between the inner ring (1) and the outer ring (3) by the ball arrangement method for a ball bearing (9) according to any one of claims 1 to 4.

7. A manufacturing method for a ball bearing (9) comprising:
manufacturing a ball bearing (9) in which the balls (7) are arranged at equal intervals in the annular space (5) between the inner ring (1) and the outer ring (3) by the ball arrangement method for a ball bearing (9) according to claim 5.

8. A manufacturing device (100) for a ball bearing (9) comprising:
a workpiece holding table (17) configured to hold an inner ring (1) and an outer ring (3) with an annular space (5) formed between the inner ring (1) and the outer ring (3);
a ball inserting portion (19) configured to load a plurality of balls (7) in one region along a circumferential direction of the annular space (5) formed between the inner ring (1) and the outer ring (3) held by the workpiece holding table (17); wherein
a flow stop and block dividing mechanism configured to movably dispose a flow stop jig (51) outside the one region of the annular space (5) in the circumferential direction along an axial direction of the inner ring (1) and the outer ring (3) to keep the plurality of inserted balls (7) in the one region, and to movably dispose a block dividing jig (52) along the axial direction of the inner ring (1) and the outer ring (3) to divide the plurality of balls (7) into groups; and
a ball dividing portion (25) configured to, from a state in which the flow stop jig (51) and the block dividing jig (52) are disposed in the annular space (5), when the flow stop jig (51) and the block dividing jig (52) are removed from the annular space (5), sequentially insert tip ends of a plurality of work arrows (63) protruded in accordance with the number of balls (7) between the plurality of balls (7) in an axial direction to arrange the plurality of balls (7) at equal intervals in the circumferential direction, **characterized in that**
at the same time as the insertion of the block dividing jig (52), the flow stop jig (51) is moved from the annular space (5) in a removing direction such that the plurality of balls (7) move in the circumferential direction while being sandwiched between the flow stop jig (51) and the block dividing jig (52).

9. The manufacturing device (100) for a ball bearing (9) according to claim 8, further comprising:
an inner ring moving mechanism configured to move the inner ring (1) to a side opposite to the one region with respect to the outer ring (3) to expand the annular space (5) in a radial direction in the one region.

10. The manufacturing device (100) for a ball bearing (9) according to claim 8, further comprising:
a tilting operation mechanism configured to tilt axial vertical surfaces of the inner ring (1) and the outer ring (3) held by the workpiece holding table (17).

11. The manufacturing device (100) for a ball bearing (9) according to claim 8, wherein the flow stop jig (51) and the block dividing jig (52) are formed in a plate shape that curves along the circumferential direction of the annular space (5) and narrows along an insertion direction into the annular space (5).

12. The manufacturing device (100) for a ball bearing (9) according to any one of claims 8 to 11, wherein the ball dividing portion (25) includes a base portion formed in an annular shape, and a plurality of work arrows (63) erected on the base portion and arranged at equal intervals in the circumferential direction, and the plurality of work arrows (63) are arranged in a positional relationship symmetrical along the circumferential direction.

13. The manufacturing device (100) for a ball bearing (9) according to claim 12, wherein the plurality of work arrows (63) include a reference work arrow (63A) arranged at a center of the symmetry, and a work arrow (63) other than the reference work arrow (63A) gradually increases in axial length as a distance from the reference work arrow (63A) increases in a range close to the reference work arrow (63A) along the circumferential direction, and gradually decreases in axial length as the distance from the reference work arrow (63A) increases in a range exceeding the range.

14. A manufacturing method for a machine using the manufacturing method for a ball bearing (9) according to claim 6 or 7.

15. A manufacturing method for a vehicle using the manufacturing method for a ball bearing (9) according to claim 6 or 7.

## Patentansprüche

1. Verfahren zum Anordnen von Kugeln in einem Kugellager (9), das die folgenden Schritte in der angegebenen Reihenfolge umfasst:
einen Kugeleinsetzschritt, bei dem mehrere Kugeln (7) in einem Gebiet entlang der Umfangsrichtung eines ringförmigen Raums (5) eingesetzt werden, das zwischen einem Innenring (1) und einem Außenring (3) gebildet ist;
einen Strömungsstoppschritt zum Anordnen einer Strömungsstoppvorrichtung (51) außerhalb des einen Gebiets des ringförmigen Raums (5) in Umfangsrichtung entlang einer axialen Richtung des Innenrings (1) und des Außenrings (3), um die mehreren eingefügten Kugeln (7) in dem einen Gebiet zu halten;
einen Blockaufteilungsschritt, bei dem eine Blockteilungsvorrichtung (52) entlang der axialen Richtung des Innenrings (1) und des Außenrings (3) angeordnet wird, um die mehreren Kugeln (7) in dem ringförmigen Raum (5) in Gruppen einzuteilen, wobei gleichzeitig mit dem Einführen der Blockteilungsvorrichtung (52) die Strömungsstoppvorrichtung (51) aus dem ringförmigen Raum (5) in einer Entnahmerichtung bewegt wird, so dass sich die mehreren Kugeln (7) in Umfangsrichtung bewegen, während sie zwischen der Strömungsstoppvorrichtung (51) und der Blockteilungsvorrichtung (52) eingeklemmt sind; und
einen Kugelaufteilungsschritt, bei dem aus einem Zustand, in dem die Strömungsstoppvorrichtung (51) und die Blockteilungsvorrichtung (52) in dem ringförmigen Raum (5) angeordnet sind, die Strömungsstoppvorrichtung (51) und die Blockteilungsvorrichtung (52) aus dem ringförmigen Raum (5) entfernt werden, die vorderen Enden mehrerer Haltestäbe (63), die entsprechend der Anzahl der Kugeln (7) hervorstehen, zwischen den mehreren Kugeln (7) in axialer Richtung der Reihe nach eingeführt werden, um die mehreren Kugeln (7) in gleichen Abständen in Umfangsrichtung anzuordnen.

2. Verfahren zum Anordnen von Kugeln für ein Kugellager (9) gemäß Anspruch 1, wobei in dem Kugeleinsetzungsschritt der Innenring (1) in Bezug auf den Außenring (3) zu einer Seite gegenüber dem einen Gebiet bewegt wird und der ringförmige Raum (5) in radialer Richtung in dem einen Gebiet erweitert wird, um die Kugeln (7) einzusetzen.

3. Verfahren zum Anordnen von Kugeln für ein Kugellager (9) gemäß Anspruch 1, wobei in dem Strömungsstoppschritt die Strömungsstoppvorrichtung (51) entlang der axialen Richtung des Innenrings (1) und des Außenrings (3) in den ringförmigen Raum (5) eingeführt wird und in dem Blockaufteilungsschritt die Blockteilungsvorrichtung (52) entlang der axialen Richtung des Innenrings (1) und des Außenrings (3) in den ringförmigen Raum (5) eingeführt wird.

4. Verfahren zum Anordnen von Kugeln für ein Kugellager (9) gemäß Anspruch 1, wobei im Kugeleinsetzschritt der Innenring (1) und der Außenring (3) mit dem einem Gebiet aus einer horizontalen Ebene aus nach oben zeigend geneigt werden.

5. Verfahren zum Anordnen von Kugeln für ein Kugellager (9) gemäß einem der Ansprüche 1 bis 4, wobei der Kugeleinsetzschritt bis zum Kugelaufteilungsschritt kontinuierlich ausgeführt wird, ohne den Innenring (1) und den Außenring (3) horizontal zu verschieben.

6. Verfahren zur Herstellung eines Kugellagers (9), mit:
Herstellen eines Kugellagers (9), bei dem die Kugeln (7) in gleichen Abständen in dem ringförmigen Raum (5) zwischen dem Innenring (1) und dem Außenring (3) durch das Verfahren zum Anordnen von Kugeln für ein Kugellager (9) gemäß einem der Ansprüche 1 bis 4 angeordnet werden.

7. Verfahren zur Herstellung eines Kugellagers (9), mit:
Herstellen eines Kugellagers (9), bei dem die Kugeln (7) in gleichen Abständen in dem ringförmigen Raum (5) zwischen dem Innenring (1) und dem Außenring (3) durch das Kugelanordnungsverfahren für ein Kugellager (9) gemäß Anspruch 5 angeordnet werden.

8. Vorrichtung (100) zur Herstellung eines Kugellagers (9), mit:
einem Werkstückhaltetisch (17), der ausgebildet ist, einen Innenring (1) und einen Außenring (3) mit einem zwischen dem Innenring (1) und dem Außenring (3) gebildeten ringförmigen Raum (5) zu halten;
einem Kugeleinsetzabschnitt (19), der ausgebildet ist, mehrere Kugeln (7) in ein Gebiet entlang einer Umfangsrichtung des ringförmigen Raums (5) einzubringen, das zwischen den von dem Werkstückhaltetisch (17) gehaltenen Innenring (1) und Außenring (3) gebildet ist;
wobei ein Strömungsstopp- und Blockteilungsmechanismus ausgebildet ist, eine Strömungsstoppvorrichtung (51) außerhalb des einen Gebiets des ringförmigen Raums (5) in Umfangsrichtung entlang einer axialen Richtung des Innenrings (1) und des Außenrings (3) beweglich anzuordnen, um die mehreren eingefügten Kugeln (7) in dem einen Gebiet zu halten, und eine Blockteilungsvorrichtung (52) entlang der axialen Richtung des Innenrings (1) und des Außenrings (3) beweglich anzuordnen, um die mehreren Kugeln (7) in Gruppen einzuteilen; und
einem Kugelteilungsabschnitt (25), der ausgebildet ist, aus einem Zustand, in dem die Strömungsstoppvorrichtung (51) und die Blockteilungsvorrichtung (52) in dem ringförmigen Raum (5) angeordnet sind, wenn die Strömungsstoppvorrichtung (51) und die Blockteilungsvorrichtung (52) aus dem Ringraum (5) entfernt werden, nacheinander die vorderen Enden mehrerer Haltestäbe (63), die entsprechend der Anzahl der Kugeln (7) hervorstehen, zwischen den mehreren Kugeln (7) in axialer Richtung einzuführen, um die mehreren Kugeln (7) in gleichen Abständen in Umfangsrichtung anzuordnen,
**dadurch gekennzeichnet, dass**
gleichzeitig mit dem Einführen der Blockteilungsvorrichtung (52) die Strömungsstoppvorrichtung (51) aus dem ringförmigen Raum (5) in einer Entnahmerichtung bewegt wird, so dass sich die mehreren Kugeln (7) in Umfangsrichtung bewegen, während sie zwischen der Strömungsstoppvorrichtung (51) und der Blockteilungsvorrichtung (52) eingeklemmt sind.

9. Vorrichtung (100) zur Herstellung eines Kugellagers (9) gemäß Anspruch 8, die ferner aufweist:
einen Innenring-Bewegungsmechanismus, der ausgebildet ist, den Innenring (1) zu einer Seite gegenüber dem einen Gebiet in Bezug auf den Außenring (3) zu bewegen, um den ringförmigen Raum (5) in radialer Richtung in dem einen Gebiet zu erweitern.

10. Vorrichtung (100) zur Herstellung eines Kugellagers (9) gemäß Anspruch 8, die ferner aufweist:
einen Kippbetätigungsmechanismus, der ausgebildet ist, axiale vertikale Flächen des Innenrings (1) und des Außenrings (3), die von dem Werkstückhaltetisch (17) gehalten werden, zu kippen.

11. Vorrichtung (100) zur Herstellung eines Kugellagers (9) gemäß Anspruch 8, wobei die Strömungsstoppvorrichtung (51) und die Blockteilungsvorrichtung (52) in einer Plattenform ausgebildet sind, die sich entlang der Umfangsrichtung des ringförmigen Raums (5) krümmt und sich entlang einer Einführrichtung in den ringförmigen Raum (5) verjüngt.

12. Vorrichtung (100) zur Herstellung eines Kugellagers (9) gemäß einem der Ansprüche 8 bis 11, wobei der Kugelteilungsabschnitt (25) einen ringförmig ausgebildeten Basisabschnitt und mehrere auf dem Basisabschnitt aufgerichtete und in Umfangsrichtung in gleichen Abständen angeordnete Haltestäbe (63) aufweist und die mehreren Haltestäbe (63) in einer symmetrischen Positionsbeziehung entlang der Umfangsrichtung angeordnet sind.

13. Vorrichtung (100) zur Herstellung eines Kugellagers (9) gemäß Anspruch 12, wobei die mehreren Haltestäbe (63) einen Referenzhaltestab (63A) enthalten, der in der Mitte der Symmetrie angeordnet ist, und ein axiale Länge von Haltestäben (63) außer dem Referenzhaltestab (63A) graduell zunimmt, wenn der Abstand von dem Referenzhaltestab (63A) in einem Bereich nahe dem Referenzhaltestab (63A) entlang der Umfangsrichtung zunimmt, und die axiale Länge graduell abnimmt, wenn der Abstand von dem Referenzhaltestab (63A) in einem Bereich zunimmt, der den Bereich überschreitet.

14. Herstellungsverfahren für eine Maschine unter Verwendung des Herstellungsverfahrens für ein Kugellager (9) gemäß Anspruch 6 oder 7.

15. Herstellungsverfahren für ein Fahrzeug unter Verwendung des Herstellungsverfahrens für ein Kugellager (9) gemäß Anspruch 6 oder 7.

## Revendications

1. Procédé d'agencement de billes pour un roulement à billes (9), comprenant les étapes suivantes exécutées dans l'ordre :
une étape d'insertion de billes consistant à insérer une pluralité de billes (7) dans une première région le long d'une direction circonférentielle d'un espace annulaire (5) formé entre une bague intérieure (1) et une bague extérieure (3) ;
une étape d'arrêt d'écoulement consistant à disposer un gabarit d'arrêt d'écoulement (51) à l'extérieur de la première région de l'espace annulaire (5) dans la direction circonférentielle, le long d'une direction axiale de la bague intérieure (1) et de la bague extérieure (3), afin de maintenir la pluralité de billes insérées (7) dans la première région ;
une étape de division en blocs consistant à disposer un gabarit de division en blocs (52) le long de la direction axiale de la bague intérieure (1) et de la bague extérieure (3) afin de diviser la pluralité de billes (7) en groupes dans l'espace annulaire (5), dans lequel, simultanément à l'insertion du gabarit de division en blocs (52), le gabarit d'arrêt d'écoulement (51) est déplacé hors de l'espace annulaire (5) dans une direction de retrait, de sorte que la pluralité de billes (7) se déplacent dans la direction circonférentielle tout en étant prises en sandwich entre le gabarit d'arrêt d'écoulement (51) et le gabarit de division en blocs (52) ; et
une étape de division de billes consistant, à partir d'un état dans lequel le gabarit d'arrêt d'écoulement (51) et le gabarit de division en blocs (52) sont disposés dans l'espace annulaire (5), tout en retirant le gabarit d'arrêt d'écoulement (51) et le gabarit de division en blocs (52) de l'espace annulaire (5), à insérer séquentiellement des extrémités de pointe d'une pluralité de flèches de travail (63) faisant saillie en fonction du nombre de billes (7), entre la pluralité de billes (7) dans la direction axiale, afin d'agencer la pluralité de billes (7) à intervalles réguliers dans la direction circonférentielle.

2. Procédé d'agencement de billes pour un roulement à billes (9) selon la revendication 1, dans lequel, lors de l'étape d'insertion de billes, la bague intérieure (1) est déplacée vers un côté opposé à la première région par rapport à la bague extérieure (3), et l'espace annulaire (5) est élargi dans une direction radiale au niveau de la première région afin de charger les billes (7).

3. Procédé d'agencement de billes pour un roulement à billes (9) selon la revendication 1, dans lequel, lors de l'étape d'arrêt d'écoulement, le gabarit d'arrêt d'écoulement (51) est inséré dans l'espace annulaire (5) le long de la direction axiale de la bague intérieure (1) et de la bague extérieure (3), et, lors de l'étape de division en blocs, le gabarit de division en blocs (52) est inséré dans l'espace annulaire (5) le long de la direction axiale de la bague intérieure (1) et de la bague extérieure (3).

4. Procédé d'agencement de billes pour un roulement à billes (9) selon la revendication 1, dans lequel, lors de l'étape d'insertion de billes, la bague intérieure (1) et la bague extérieure (3) sont inclinées avec la première région orientée vers le haut par rapport à un plan horizontal.

5. Procédé d'agencement de billes pour un roulement à billes (9) selon l'une quelconque des revendications 1 à 4, dans lequel l'étape d'insertion de billes jusqu'à l'étape de division de billes sont exécutées de manière continue sans transport horizontal de la bague intérieure (1) et de la bague extérieure (3).

6. Procédé de fabrication d'un roulement à billes (9), comprenant :
la fabrication d'un roulement à billes (9) dans lequel les billes (7) sont agencées à intervalles réguliers dans l'espace annulaire (5) entre la bague intérieure (1) et la bague extérieure (3) par le procédé d'agencement de billes pour un roulement à billes (9) selon l'une quelconque des revendications 1 à 4.

7. Procédé de fabrication d'un roulement à billes (9), comprenant :
la fabrication d'un roulement à billes (9) dans lequel les billes (7) sont agencées à intervalles réguliers dans l'espace annulaire (5) entre la bague intérieure (1) et la bague extérieure (3) par le procédé d'agencement de billes pour un roulement à billes (9) selon la revendication 5.

8. Dispositif de fabrication (100) d'un roulement à billes (9), comprenant :
une table de maintien de pièce (17) configurée pour maintenir une bague intérieure (1) et une bague extérieure (3) avec un espace annulaire (5) formé entre la bague intérieure (1) et la bague extérieure (3) ;
une partie d'insertion de billes (19) configurée pour charger une pluralité de billes (7) dans une première région le long d'une direction circonférentielle de l'espace annulaire (5) formé entre la bague intérieure (1) et la bague extérieure (3) maintenues par la table de maintien de pièce (17) ; dans lequel
un mécanisme d'arrêt d'écoulement et de division en blocs configuré pour disposer de manière mobile un gabarit d'arrêt d'écoulement (51) à l'extérieur de la première région de l'espace annulaire (5) dans la direction circonférentielle, le long d'une direction axiale de la bague intérieure (1) et de la bague extérieure (3), afin de maintenir la pluralité de billes insérées (7) dans la première région, et pour disposer de manière mobile un gabarit de division en blocs (52) le long de la direction axiale de la bague intérieure (1) et de la bague extérieure (3) afin de diviser la pluralité de billes (7) en groupes ; et
une partie de division de billes (25) configurée pour, à partir d'un état dans lequel le gabarit d'arrêt d'écoulement (51) et le gabarit de division en blocs (52) sont disposés dans l'espace annulaire (5), lors du retrait du gabarit d'arrêt d'écoulement (51) et du gabarit de division en blocs (52) de l'espace annulaire (5), insérer séquentiellement des extrémités de pointe d'une pluralité de flèches de travail (63) faisant saillie en fonction du nombre de billes (7), entre la pluralité de billes (7) dans la direction axiale, afin d'agencer la pluralité de billes (7) à intervalles réguliers dans la direction circonférentielle, **caractérisé en ce que**
simultanément à l'insertion du gabarit de division en blocs (52), le gabarit d'arrêt d'écoulement (51) est déplacé hors de l'espace annulaire (5) dans une direction de retrait, de sorte que la pluralité de billes (7) se déplacent dans la direction circonférentielle tout en étant prises en sandwich entre le gabarit d'arrêt d'écoulement (51) et le gabarit de division en blocs (52).

9. Dispositif de fabrication (100) d'un roulement à billes (9) selon la revendication 8, comprenant en outre :
un mécanisme de déplacement de bague intérieure configuré pour déplacer la bague intérieure (1) vers un côté opposé à la première région par rapport à la bague extérieure (3) afin d'élargir l'espace annulaire (5) dans une direction radiale dans la première région.

10. Dispositif de fabrication (100) d'un roulement à billes (9) selon la revendication 8, comprenant en outre :
un mécanisme d'opération d'inclinaison configuré pour incliner les surfaces axiales verticales de la bague intérieure (1) et de la bague extérieure (3) maintenues par la table de maintien de pièce (17).

11. Dispositif de fabrication (100) d'un roulement à billes (9) selon la revendication 8, dans lequel le gabarit d'arrêt d'écoulement (51) et le gabarit de division en blocs (52) se présentent en forme de plaque qui s'incurve le long de la direction circonférentielle de l'espace annulaire (5) et qui se rétrécit le long d'une direction d'insertion dans l'espace annulaire (5).

12. Dispositif de fabrication (100) d'un roulement à billes (9) selon l'une quelconque des revendications 8 à 11, dans lequel la partie de division de billes (25) comprend une partie de base se présentant en forme annulaire, et une pluralité de flèches de travail (63) dressées sur la partie de base et agencées à intervalles réguliers dans la direction circonférentielle, et la pluralité de flèches de travail (63) sont agencées selon une relation de position symétrique le long de la direction circonférentielle.

13. Dispositif de fabrication (100) d'un roulement à billes (9) selon la revendication 12, dans lequel la pluralité de flèches de travail (63) comprend une flèche de travail de référence (63A) agencée au centre de la symétrie, et une flèche de travail (63) autre que la flèche de travail de référence (63A) dont la longueur axiale augmente progressivement à mesure que la distance par rapport à la flèche de travail de référence (63A) augmente dans une plage proche de la flèche de travail de référence (63A) le long de la direction circonférentielle, et dont la longueur axiale diminue progressivement à mesure que la distance par rapport à la flèche de travail de référence (63A) augmente dans une plage excédant la plage.

14. Procédé de fabrication d'une machine en utilisant le procédé de fabrication d'un roulement à billes (9) selon la revendication 6 ou 7.

15. Procédé de fabrication d'un véhicule en utilisant le procédé de fabrication d'un roulement à billes (9) selon la revendication 6 ou 7.
